# EUROPEAN PATENT SPECIFICATION

(11) **EP 4 471 957 B1**
(45) Date of publication and mention of the grant of the patent: **01.07.2026**
(21) Application number: 23898223.5
(22) Date of filing: 24.11.2023
(51) Int. Cl.: H01M 50/291, H01M 50/262, H01M 50/207, H01M 50/258, H01M 50/204

(54) **BATTERY PACK**
BATTERIEPACK
BLOC-BATTERIE

(30) Priority: 02.12.2022 KR 20220167141; 21.03.2023 KR 20230036409
(43) Date of publication of application: 04.12.2024
(73) Proprietor: LG Energy Solution, Ltd., Seoul 07335 (KR)
(72) Inventor: JEON, Jong Pil, Daejeon 34122 (KR); KIM, Min Bum, Daejeon 34122 (KR); SHIN, Ju Hwan, Daejeon 34122 (KR); HUR, Nam Hoon, Daejeon 34122 (KR)
(74) Representative: Plasseraud IP
(86) International application number: PCT/KR2023/019148
(87) International publication number: WO 2024/117692

(56) References cited:
- CN-A- 112 310 541
- CN-A- 112 310 541
- CN-U- 215 451 614
- KR-A- 20180 113 906
- KR-A- 20220 014 027
- KR-A- 20220 014 027
- KR-A- 20220 156 319
- KR-A- 20220 156 319

## Description

### [Technical Field]

The present invention relates to a battery pack, and more particularly to a battery pack in which a single cross beam can improve the structural stiffness and space utilization of the pack case, facilitate the in-pack mounting of a battery cell assembly, and ensure its solid fixed state.

This application claims the benefit of priority based on Korean Patent Application No. 10-2022-0167141, filed on December 02, 2022, and Korean Patent Application No. 10-2023-0036409, filed on March 21, 2023. Document KR20220014027A discloses a battery pack according to the preamble of claim 1.

### [Background Art]

Cell-to-pack battery packs have been proposed to improve the space utilization of battery packs. The cell-to-pack structure has the advantage of improving the space utilization of the battery pack by assembling a plurality of cells directly into the battery pack without modularization.

As separate module housings are omitted or simplified in cell-to-pack structures, it becomes important to ensure the stiffness of the battery pack. For example, a plurality of cells forming a battery cell assembly (corresponding to a conventional battery module) can be coupled to a side frame, and the side frame of the battery cell assembly housed in the pack case can be designed to act as the crossbeam of a conventional battery pack.

However, when a plurality of cell assemblies are arranged in the width direction of the pack case to increase the capacity of the battery pack, the side frames of adjacent cell assemblies facing each other in the width direction center of the battery pack are not connected to each other, which weakens the structural stiffness of the battery pack.

To solve this problem, a structure can be designed in which a center beam is placed at the length direction center of the battery pack, and the side frames that are not connected to each other are connected and fixed to the center beam. However, this combination of side frames and center beams complicates the assembly process of the battery pack, increases the weight of the battery pack as the number of parts increases, and reduces the energy density of the battery pack by reducing the space utilization as previously.

### [Disclosure]

### [Technical Problem]

In constructing a battery pack with a cell-to-pack structure, the present invention is directed to providing a battery pack that is capable of maintaining good stiffness even in a simplified structure, simplifies the process of mounting a plurality of cell assemblies, and allows for solid regulation of the position of the cell assemblies.

However, the technical problem to be solved by the present invention is not limited to the above-described problem, and other problems not mentioned can be clearly understood by a person skilled in the art from the description of the invention described below.

### [Technical Solution]

The present invention relates to a battery pack, comprising a base plate, side plates coupled along a periphery of the base plate to form a receiving space therein, and a single crossbeam coupled to the base plate to transversely and integrally divide the receiving space inside the base plate, and a plurality of cell assemblies mounted in the receiving space divided by the single crossbeam, and interposed between the plurality of battery cell assemblies and the single crossbeam is a guide structure regulating the position of each battery cell assembly in an XY plane corresponding to a surface of the base plate.

Each battery cell assembly comprises a plurality of battery cells and a busbar frame assembly mechanically and electrically coupling to the plurality of battery cells at transverse ends wherein leads of the battery cells protrude, and the guide structure comprises guide slots recessed and formed along a height direction of the single crossbeam, and guide ribs provided in the busbar frame assembly to glide along the guide slots.

The guide structures may be provided at four corners of the battery cell assembly.

Further, the guide slots may be formed over the entire height of the single crossbeam, and the guide ribs may be formed over at least a portion of the entire height along the sides of the busbar frame assembly.

Meanwhile, the battery pack of the present invention may be interposed between the plurality of battery cell assemblies and the single cross beam, a fixing structure regulating the position of each battery cell assembly along the Z-axis.

The fixing structure may be a first groove recessed and formed in a lower part of the single crossbeam, and a first hook provided in the busbar frame assembly to engage the first groove.

**In** one embodiment, this first hook may be a resiliently movable resilient hook, and this first groove and first hook may form a snap-fit joint.

Additionally, the fixing structure may further comprise a second groove recessed and formed in an upper part of the single cross beam, and a second hook provided in the busbar frame assembly to contact a lower step of the second groove.

In one embodiment, the second groove may be an open groove with an open top, and the second hook may be a rigid hook for contacting a lower step of the second groove to support the battery cell assembly.

Further, the first groove and the second groove may be disposed separately from each other, in and around the boundary of the guide slot.

For example, the first hook may be disposed further outwardly of the battery cell assembly than the second hook.

The first hook and the second hook, together with the guide ribs, may be disposed on the sides of the busbar frame assembly.

### [Advantageous Effects]

In the battery pack of the present invention having the above structure, the receiving space inside the pack case is divided by a single cross beam, and the single cross beam is connected as one across the entire transverse direction of the pack case. Thus, the absence of a center beam simplifies the assembly process of the battery pack, reduces the number of parts, enables the battery pack to be lightweight, improves space utilization, and maintains good stiffness of the pack case by the single cross beam.

In addition, the installation position of the plurality of cell assemblies is regulated precisely when the plurality of cell assemblies are mounted between the paired single crossbeams by guide structures and fixing structures interposed between the plurality of cell assemblies and the single crossbeam.

However, the technical effects that can be obtained through the present invention is not limited to the above-described effects, and other effects not mentioned can be clearly understood by a person skilled in the art from the description of the invention described below.

### [Brief Description of the Drawings]

Because the following drawings attached to the present specification illustrate exemplary embodiments of the present invention and serve to facilitate understanding of the technical idea of the present invention together with the detailed description of the invention described below, the present invention should not be limitedly interpreted on the basis of the drawings.
FIG. 1 is an overall view of the internal structure of a battery pack according to one embodiment of the present invention.
FIG. 2 is a drawing illustrating a structure in which a battery cell assembly is mounted in a pack case.
FIG. 3 is an enlarged view of the structure of a guide structure interposed between the battery cell assembly and a single cross beam.
FIG. 4 is a diagram illustrating a structure in which the battery cell assembly is coupled to the single crossbeam through the guide structure.
FIG. 5 is an enlarged view of the structure of the fixing structure interposed between the battery cell assembly and the single cross beam.
FIG. 6 illustrates a fixing structure provided on the battery cell assembly.
FIG. 7 illustrates a fixing structure provided on the single cross beam.
FIG. 8 is a rear view of the structure of the fixing structure of FIG. 5.
FIG. 9 is a top view of the structure of the fixing structure of FIG. 5.
FIG. 10 is a cross-sectional view of the "A" portion of FIG. 8.
FIG. 11 is a cross-sectional view of the "B" portion of FIG. 8.

### [Best Mode]

The present invention may have various modifications and various embodiments, and thus specific embodiments thereof will be described in detail below.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present invention, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present invention relates to a battery pack, comprising, in one example, a base plate, side plates coupled along a periphery of the base plate to form a receiving space therein, and a single crossbeam coupled to the base plate to transversely and integrally divide the receiving space inside the base plate, and a plurality of cell assemblies mounted in the receiving space divided by the single crossbeam, wherein between the plurality of cell assemblies and the single crossbeam is interposed a guide structure regulating the position of each battery cell assembly in an XY plane corresponding to a surface of the base plate.

In the battery pack of the present invention with such a structure, the receiving space inside the pack case is divided by a single cross beam, and the single cross beam is connected as one across the entire transverse direction of the pack case. Thus, the absence of a center beam simplifies the assembly process of the battery pack, reduces the number of parts, enables the battery pack to be lightweight, improves space utilization, and maintains good stiffness of the pack case by the single cross beam.

In addition, the installation position of the plurality of cell assemblies is regulated precisely when the plurality of cell assemblies are mounted between the paired single crossbeams by guide structures interposed between the plurality of cell assemblies and the single crossbeam.

### [Mode for Invention]

Hereinafter, specific embodiments of a secondary battery of the present invention will be described in detail with reference to the accompanying drawings. For reference, the directions of front, back, up, down, left, and right used in the following description to designate relative positions are for the purpose of understanding the invention and refer to the directions shown in the drawings unless otherwise specified.

### [first embodiment]

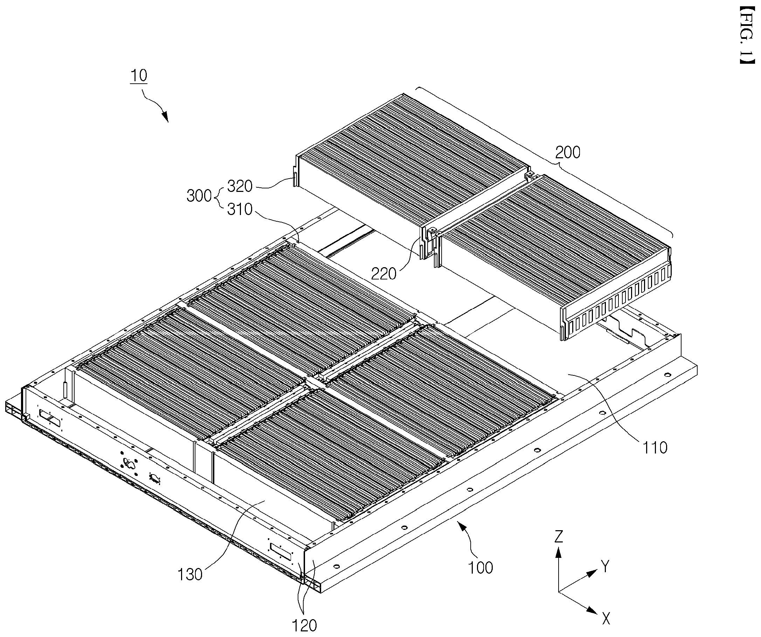

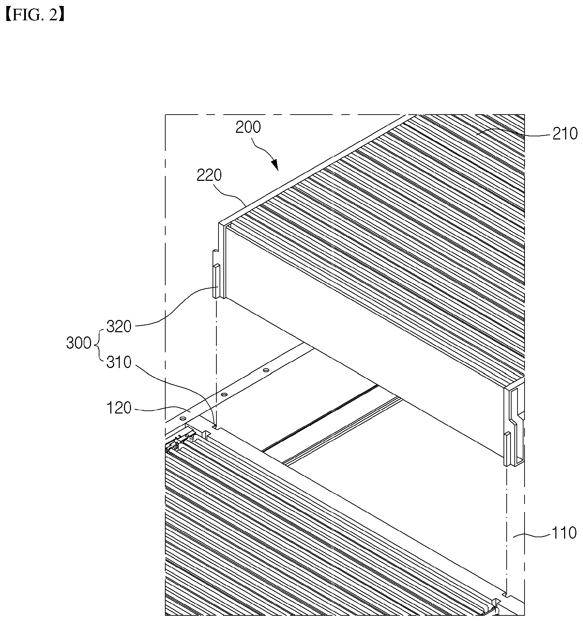

FIG. 1 is an overall view of the internal structure of a battery pack according to one embodiment of the present invention, and FIG. 2 is a drawing illustrating a structure in which a battery cell assembly is mounted in a pack case. A battery pack 10 of the present invention includes a pack case 100 and a plurality of battery cell assemblies 200 mounted within the pack case 100.

The pack case 100 includes a base plate 110, side plates 120 coupled along the perimeter of the base plate 110 to form a receiving space therein, and a single cross beam 130 coupled to the base plate 110 to transversely enclose the receiving space within the base plate 110. As used herein, the single cross beam 130 refers to a cross beam that is uninterrupted across the full width of the side plate 120 in the transverse direction (x-axis direction in the drawings), such that good stiffness against transverse loading is provided by the single cross beam 130 without the need for additional separation walls, such as a center beam.

Additionally, a plurality of battery cell assemblies 200 are mounted in the receiving space transversely divided by the single cross beam 130. As shown, there is no longitudinal separation walls such as a center beam, inside the pack case 100 of the present invention, so that space exists between adjacent cell assemblies 200. For example, when two cell assemblies 200 are arranged transversely, as in the embodiment shown, there is a free space in the central area of the pack case 100 for electrical wiring and the like. Therefore, there is a need for a means to regulate the position between cell assemblies 200 that share the same accommodation space, in place of the module housing or center beam provided in the conventional battery pack 10.

For this purpose, the battery pack 10 of the present invention comprises a guide structure 300 interposed between the plurality of battery cell assemblies 200 and the single cross beam 130, the guide structure 300 regulating the position of each battery cell assembly 200 in an XY plane corresponding to the surface of the base plate 110.

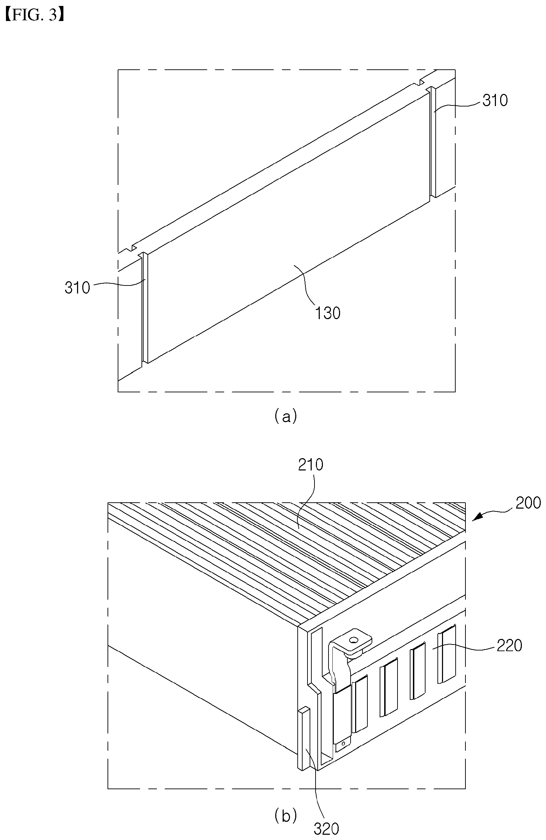

FIG. 3 is an enlarged view of the structure of the guide structure 300 interposed between the battery cell assembly 200 and the single crossbeam 130, separately illustrating the guide structure 300 provided in the battery cell assembly 200 and the single crossbeam 130, respectively.

In the embodiment of FIG. 3, each battery cell assembly 200 includes a plurality of battery cells 210 and a busbar frame assembly 220 that mechanically and electrically couples to the plurality of battery cells 210 at transverse ends from which leads 212 of the battery cells 210 protrude. The guide structure 300 on the side of the battery cell assembly 200 is a protruding guide rib 320, which is provided, for example, on the side of the busbar frame assembly 220. Correspondingly, the guide structure 300 on the side of the single crossbeam 130 is provided with guide slots 310 recessed along the height direction (the z-axis direction in the drawing).

For reference, a secondary battery having a plurality of positive and negative electrodes, a separator laminated therebetween, and leads 212 electrically connecting each of the electrode taps provided on the positive and negative electrodes is referred to herein as a battery cell 210, i.e., a battery cell 210 refers to a single, completed battery cell capable of being repeatedly charged and discharged, and is not limited to the form of a pouch cell, prismatic cell, or the like. Further, the battery cell assembly 200 corresponds to the concept of a module of a plurality of such battery cells 210, wherein a batch of battery cells 210 are mechanically constrained and electrically connected by a busbar frame assembly 220 at the front and rear ends.

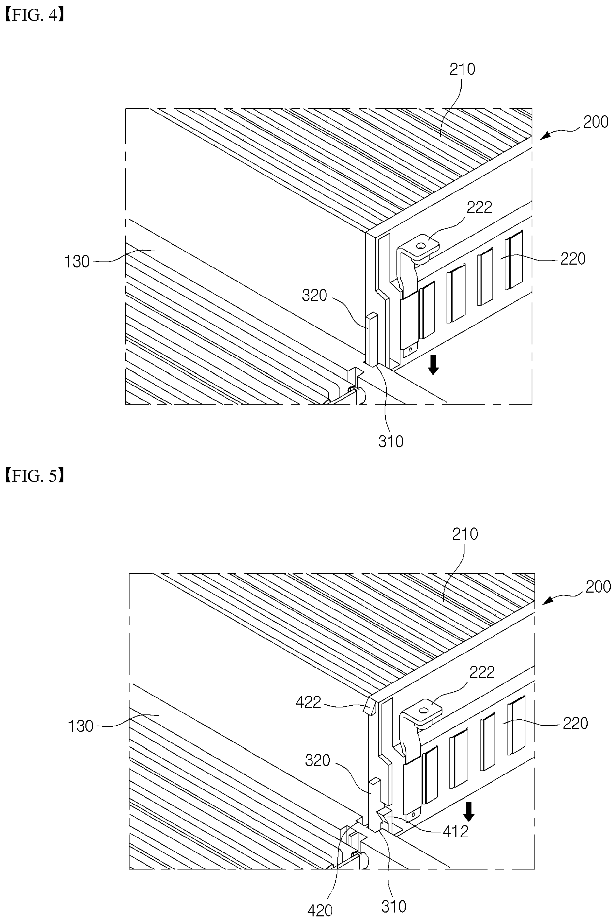

FIG. 4 is a diagram illustrating a structure in which a battery cell assembly 200 couples to a single crossbeam 130 through a guide structure 300. The cell assembly 200 is mounted in the pack case 100 with both sides facing the single cross beam 130, i.e., with the busbar frame assemblies 220 at the front and rear ends facing longitudinally (Y direction in the drawing). The distance between the parallel single crossbeams 130 corresponds to the full width of the battery cell assembly 200. Accordingly, in order to insert the battery cell assembly 200 between the paired single crossbeams 130, mounting can only be accomplished by aligning the guide ribs 320 of the battery cell assembly 200 with the guide slots 310 of the single crossbeams 130. Thus, the mounting position of each battery cell assembly 200 with respect to the base plate 110 is precisely regulated.

Further, with the guide slots 310 and guide ribs 320 formed along the Z-axis direction, the battery cell assembly 200 is regulated in its movement in the XY plane formed by the base plate 110. In other words, with the guide structure 300 in the position, the battery cell assembly 200 can only move in the insertion direction and cannot move on the base plate 110. Thus, the mounting position of each battery cell assembly 200 on the base plate 110 is rigidly fixed by the guide structure 300.

For accurate and solid positioning of the battery cell assembly 200, guide structures 300 may be provided at four corners of the battery cell assembly 200. Further, guide slots 310 may be formed across the entire height of the single crossbeam 130, while guide ribs 320 may be formed along the sides of the busbar frame assembly 220 for at least a portion of the entire height. By forming the guide ribs 320 over a portion of the height of the busbar frame assembly 220, good accessibility to the terminals 222 provided on the busbar frame assembly 220 can be provided. In this case, the guide ribs 320 preferably extend from the bottom of the busbar frame assembly 220, as this is advantageous for determining an initial insertion position for the guide slots 310 of the single crossbeam 130.

### [Second embodiment]

By the guide structure 300 according to the first embodiment, the position of the battery cell assembly 200 in the XY plane with respect to the pack case 100 is effectively regulated. In addition, a second embodiment describes an embodiment for a fixing structure 400 that can constrain the battery cell assembly 200 in the Z-axis direction.

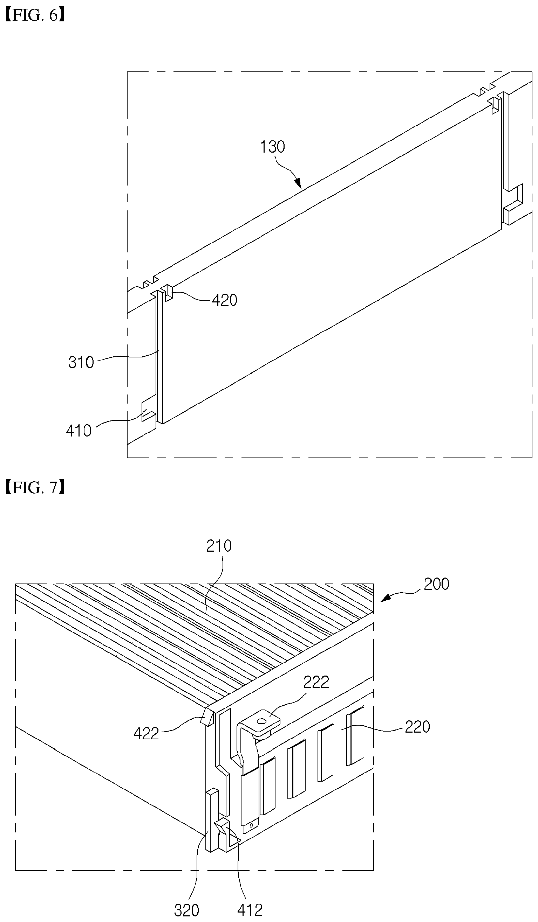

A fixing structure 400 for regulating the position of the battery cell assembly 200 in the Z-axis direction is also provided between the battery cell assembly 200 and the single cross beam 130. FIG. 5 is a diagram illustrating the structure of the fixing structure 400 interposed between the battery cell assembly 200 and the single cross beam 130, FIG. 6 is a diagram illustrating the fixing structure 400 provided on the battery cell assembly 200, and FIG. 7 is a diagram illustrating the fixing structure 400 provided on the single cross beam 130. As shown, the fixing structure 400 includes a first groove 410 recessed in a lower part of the single crossbeam 130, and a first hook 412 provided in the busbar frame assembly 220 to engage the first groove 410.

In one embodiment of the present invention, the first hook 412 is a resiliently movable resilient hook, and the first groove 410 and the first hook 412 form a snap-fit joint 414. That is, when the guide ribs 320 of the battery cell assembly 200 are snapped into the guide slots 310 on the pair of single crossbeams 130, the first hook 412, which is a cantilevered resilient hook, slides over the surface of the single crossbeam 130 in a slightly retracted position. Once the first hook 412 is aligned with the first groove 410, it resiliently returns to its original position, forming a snap-fit joint 414 in which the wedge end of the first hook 412 engages the upper end of the first groove 410.

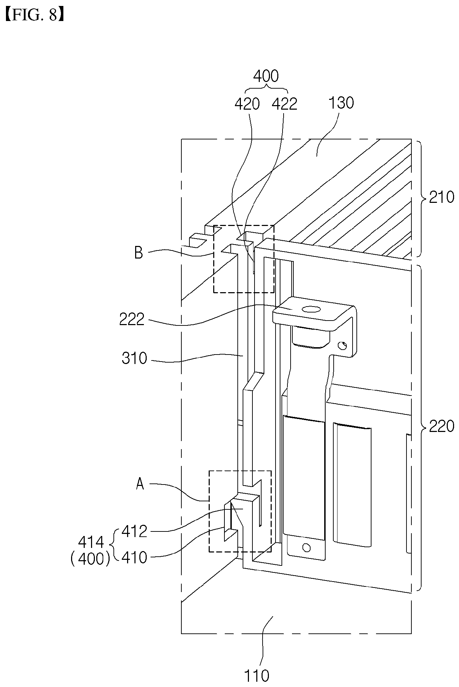

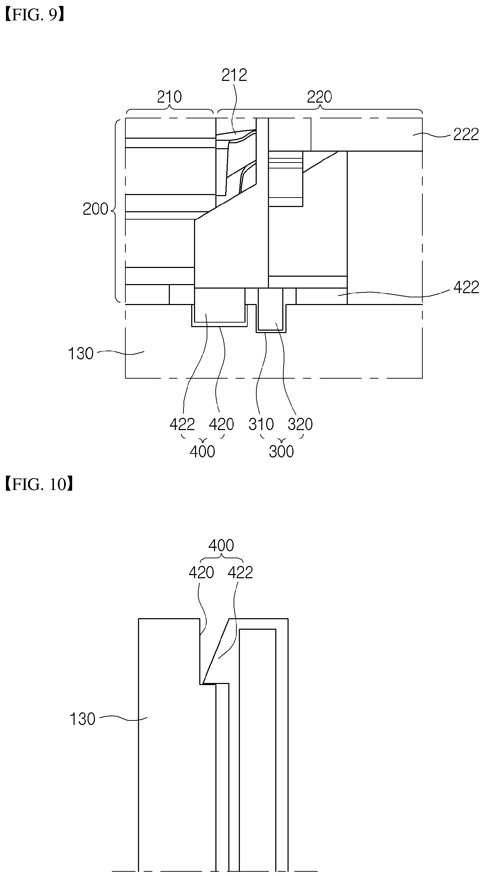

FIG. 8 is a rear view of the structure of the fixture 400 of FIG. 5, and FIG. 10 is a cross-sectional view of portion "A" of FIG. 8. As shown, the battery cell assembly 200 is constrained from movement in the (+)Z-axis direction by the snap-fit action of the first hook 412 engaging the upper end of the first groove 410. In other words, by the first hook 412 and the first groove 410, the battery cell assembly 200 mounted within the single crossbeam 130 is prevented from deviating upwardly.

The fixing structure 400 may further include a second groove 420 recessed in an upper part of the single cross beam 130, and a second hook 422 provided in the busbar frame assembly 220 to contact a step of the second groove 420. In the embodiment shown, the second groove 420 is an open groove with an open top, and the second hook 422 is configured as a rigid hook that contacts the lower end of the second groove 420 to support the battery cell assembly 200.

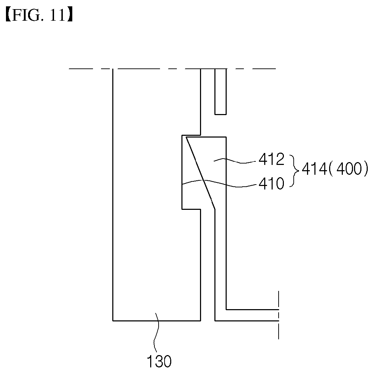

While the first hook 412 and first groove 410 are intended to constrain the (+)Z-axis movement of the battery cell assembly 200, the second hook 422 and second groove 420 are intended to constrain the (-)Z-axis movement of the battery cell assembly 200. FIG. 9 is a top view of the structure of the anchoring structure 400 of FIG. 5, and FIG. 11 is a cross-sectional view of portion "B" of FIG. 8, wherein the inner surface of the wedge end of the second hook 422 is configured to hook the lower step of the second groove 420, such that the cell assembly 200 is no longer able to move downwardly, i.e., in the (-)Z-axis direction.

By the second hook 422 and second groove 420, the battery cell assembly 200 is prevented from being pressed against the base plate 110 even if downward pressure is applied to the battery cell assembly 200. In particular, when the battery cell assembly 200 is mounted in the pack case 100 as a cell-to-pack structure without a separate module housing, the second hook 422 and second groove 420 are useful to prevent the lower part of the battery cell assembly 200 from being damaged by external forces, as there is no framing structure to protect the lower surface of the battery cell assembly 200.

In the shown embodiment, the second groove 420 is configured as an upwardly opening groove and the second hook 422 as a rigid hook because it is more advantageous to enhance the downward protection of such a battery cell assembly 200, but the second hook 422 and second groove 420 could also be configured as a snap-fit joint if movement in the (-)Z-axis direction can be limited.

In addition, as in the embodiment shown in FIGS. 6 to 9, the first groove 410 and the second groove 420 may be separately disposed from each other in and around the guide slot 310. The separate arrangement of the first groove 410 and the second groove 420 entails a corresponding separate arrangement of the first hook 412 and the second hook 422. This separate arrangement of the fixing structure 400 allows for a more stable positioning of the battery cell assembly 200 by distributing the point of action of the force about the z-axis direction, as well as avoiding interference with the binding action of the first hook 412 and the second hook 422 on each of the first hook 412 and the second hook 422.

For example, the first hook 412 may be disposed further out on the periphery of the battery cell assembly 200 than the second hook 422. This is because it is more stable for the first hook 412, which is a deformable resilient hook, to constrain the battery cell assembly 200 over as large an area as possible. The first hook 412 and second hook 422, along with the guide ribs 320, may be disposed on the sides of the busbar frame assembly 220. By disposing the guide structure 300 and the fixing structure 400 together on the sides of the busbar frame assembly 220, the structural design of the busbar frame assembly 220 is simplified, and access to the terminals 222 and various insulation and protection designs are improved.

### [Description of Reference Numerals]

10: battery pack
100: pack case
110: base plate
120: side plate
130: single cross beam
200: battery cell assembly
210: battery cell
220: busbar frame assembly
222: terminal
300: guide structure
310: guide slot
320: guide rib
400: fixing structure
410: first groove
412: first hook
414: snap-fit joint
420: second groove
422: second hook

## Claims

1. A battery pack (10), comprising:
a base plate (110);
side plates (120) coupled to one another and to the base plate (110) along a periphery of the base plate (110) to form a receiving space therein; and
a crossbeam (130) coupled to the base plate (110) that transversely divides the receiving space inside the base plate (110); and
a plurality of battery cell assemblies (200) mounted in the receiving space,
wherein the plurality of battery cell assemblies (200) and the crossbeam together comprise a guide structure (300) fixing a position of each cell assembly in an XY plane relative to a surface of the base plate (110),
wherein each battery cell assembly (200) comprises a plurality of battery cells (210) and a busbar frame assembly (220) mechanically and electrically coupling to the plurality of battery cells (210) at transverse ends thereof where leads of the battery cells (210) protrude, the battery pack being **characterised in that**
the guide structure (300) comprises guide slots (310) recessed into and extending along a height direction of the crossbeam and guide ribs (320) extending from each busbar frame assembly (220), the guide ribs (320) configured to glide along the guide slots (310) during insertion of the battery cell assemblies (200) into the receiving space.

2. The battery pack (10) of claim 1, wherein the crossbeam is a first crossbeam and the guide structure (300) is a first guide structure of a plurality of guide structures, the battery pack (10) further comprising a second crossbeam, each of the first and second crossbeams comprising portions of a plurality of guide structures, one of the guide structures being located at each of four corners of the battery cell assembly (200), respectively.

3. The battery pack (10) of claim 1, wherein the guide slots (310) extend along an entire height of the crossbeam, and the guide ribs (320) extend along at least a portion of an entire height of the sides of each busbar frame assembly (220).

4. The battery pack (10) of claim 1, wherein the plurality of battery cell assemblies (200) and the crossbeam together comprise a fixing structure (400) fixing a position of each battery cell assembly (200) relative to the base plate (110) along a Z-axis of the battery pack (10).

5. The battery pack (10) of claim 4, wherein the fixing structure (400) includes a first groove (410) recessed into a lower part of the crossbeam and a first hook (412) extending from each busbar frame assembly (220), the first hook (412) engaged with the first groove (410).

6. The battery pack (10) of claim 5, wherein the first hook (412) is a resiliently movable hook, and the first groove (410) and first hook (412) together form a snap-fit joint (414).

7. The battery pack (10) of claim 5, wherein the fixing structure (400) further comprises a second groove (420) recessed into an upper part of the crossbeam and a second hook (422) extending from each busbar frame assembly (220) and contacting a lower step of the second groove (420).

8. The battery pack (10) of claim 7, wherein the second groove (420) has an open top, and the second hook (422) is a rigid hook that contacts the lower step of the second groove (420) to support the battery cell assembly (200).

9. The battery pack (10) of claim 7, wherein the first groove (410) and the second groove (420) are spaced apart from each other and are each disposed outside of an outer boundary of the guide slot (310).

10. The battery pack (10) of claim 9, wherein the first hook (412) extends further away from the battery cell assembly (200) than the second hook (422).

11. The battery pack (10) of claim 7, wherein the first hook (412), the second hook (422), and the guide ribs (320) are each disposed on sides of the busbar frame assembly (220).

## Patentansprüche

1. Batteriepack (10), umfassend:
eine Grundplatte (110);
Seitenplatten (120), die miteinander und mit der Grundplatte (110) entlang eines Umfangs der Grundplatte (110) gekoppelt sind, um darin einen Aufnahmeraum zu bilden; und
einen Querträger (130), der mit der Grundplatte (110) gekoppelt ist und den Aufnahmeraum innerhalb der Grundplatte (110) quer teilt; und
eine Vielzahl von Batteriezellenanordnungen (200), die in dem Aufnahmeraum montiert sind,
wobei die Vielzahl von Batteriezellenanordnungen (200) und der Querträger zusammen eine Führungsstruktur (300) umfassen, die eine Position jeder Zellenanordnung in einer XY-Ebene relativ zu einer Oberfläche der Grundplatte (110) fixiert,
wobei jede Batteriezellenanordnung (200) eine Vielzahl von Batteriezellen (210) und eine Sammelschienen-Rahmenanordnung (220) umfasst, die mechanisch und elektrisch mit der Vielzahl von Batteriezellen (210) an deren Querenden gekoppelt ist, wo Leitungen der Batteriezellen (210) vorstehen,
wobei der Batteriepack **dadurch gekennzeichnet ist, dass**
die Führungsstruktur (300) Führungsschlitze (310), die in den Querträger eingelassen sind und sich entlang einer Höhenrichtung des Querträgers erstrecken, und
Führungsrippen (320) umfasst, die sich von jeder Sammelschienen-Rahmenanordnung (220) erstrecken, wobei die Führungsrippen (320) so konfiguriert sind, dass sie während des Einsetzens der Batteriezellenanordnungen (200) in den Aufnahmeraum entlang der Führungsschlitze (310) gleiten.

2. Batteriepack (10) nach Anspruch 1, wobei der Querträger ein erster Querträger ist und die Führungsstruktur (300) eine erste Führungsstruktur aus einer Vielzahl von Führungsstrukturen ist, wobei der Batteriepack (10) ferner einen zweiten Querträger umfasst, wobei jeder der ersten und zweiten Querträger Abschnitte einer Vielzahl von Führungsstrukturen umfasst, wobei sich jeweils eine der Führungsstrukturen an jeder von vier Ecken der Batteriezellenanordnung (200) befindet.

3. Batteriepack (10) nach Anspruch 1, wobei sich die Führungsschlitze (310) über eine gesamte Höhe des Querträgers erstrecken und sich die Führungsrippen (320) entlang mindestens eines Teils einer gesamten Höhe der Seiten jeder Sammelschienen-Rahmenanordnung (220) erstrecken.

4. Batteriepack (10) nach Anspruch 1, wobei die Vielzahl von Batteriezellenanordnungen (200) und der Querträger zusammen eine Befestigungsstruktur (400) umfassen, die eine Position jeder Batteriezellenanordnung (200) relativ zur Grundplatte (110) entlang einer Z-Achse des Batteriepacks (10) fixiert.

5. Batteriepack (10) nach Anspruch 4, wobei die Befestigungsstruktur (400) eine erste Nut (410), die in einem unteren Teil des Querträgers eingelassen ist, und einen ersten Haken (412) einschließt, der sich von jeder Sammelschienen-Rahmenanordnung (220) erstreckt, wobei der erste Haken (412) mit der ersten Nut (410) in Eingriff steht.

6. Batteriepack (10) nach Anspruch 5, wobei der erste Haken (412) ein elastisch beweglicher Haken ist und die erste Nut (410) und der erste Haken (412) zusammen eine Schnappverbindung (414) bilden.

7. Batteriepack (10) nach Anspruch 5, wobei die Befestigungsstruktur (400) ferner eine zweite Nut (420), die in einem oberen Teil des Querträgers eingelassen ist, und einen zweiten Haken (422) umfasst, der sich von jeder Sammelschienen-Rahmenanordnung (220) erstreckt und eine untere Stufe der zweiten Nut (420) kontaktiert.

8. Batteriepack (10) nach Anspruch 7, wobei die zweite Nut (420) eine offene Oberseite aufweist und der zweite Haken (422) ein starrer Haken ist, der die untere Stufe der zweiten Nut (420) kontaktiert, um die Batteriezellenanordnung (200) zu stützen.

9. Batteriepack (10) nach Anspruch 7, wobei die erste Nut (410) und die zweite Nut (420) voneinander beabstandet sind und jeweils außerhalb einer äußeren Begrenzung des Führungsschlitzes (310) angeordnet sind.

10. Batteriepack (10) nach Anspruch 9, wobei sich der erste Haken (412) weiter von der Batteriezellenanordnung (200) weg erstreckt als der zweite Haken (422).

11. Batteriepack (10) nach Anspruch 7, wobei der erste Haken (412), der zweite Haken (422) und die Führungsrippen (320) jeweils an Seiten der Sammelschienen-Rahmenanordnung (220) angeordnet sind.

## Revendications

1. Bloc-batterie (10), comprenant :
une plaque de base (110) ;
des plaques latérales (120) couplées les unes aux autres et à la plaque de base (110) le long d'une périphérie de la plaque de base (110) pour former un espace de réception en son sein ; et
une traverse (130) couplée à la plaque de base (110) qui divise transversalement l'espace de réception à l'intérieur de la plaque de base (110) ; et
une pluralité d'ensembles de cellules de batterie (200) montés dans l'espace de réception,
dans lequel la pluralité d'ensembles de cellules de batterie (200) et la traverse comprennent conjointement une structure de guidage (300) fixant une position de chaque ensemble de cellules dans un plan XY par rapport à une surface de la plaque de base (110),
dans lequel chaque ensemble de cellules de batterie (200) comprend une pluralité de cellules de batterie (210) et un ensemble de bâti de bus-barre (220) se couplant mécaniquement et électriquement à la pluralité de cellules de batterie (210) au niveau des extrémités transversales de celles-ci où des conducteurs des cellules de batterie (210) font saillie,
le bloc-batterie étant **caractérisé en ce que**
la structure de guidage (300) comprend des fentes de guidage (310) évidées dans la traverse et s'étendant le long d'une direction de la hauteur de celle-ci et des nervures de guidage (320) s'étendant depuis chaque ensemble de bâti de bus-barre (220), les nervures de guidage (320) étant configurées pour glisser le long des fentes de guidage (310) pendant l'insertion des ensembles de cellules de batterie (200) dans l'espace de réception.

2. Bloc-batterie (10) selon la revendication 1, dans lequel la traverse est une première traverse et la structure de guidage (300) est une première structure de guidage d'une pluralité de structures de guidage, le bloc-batterie (10) comprenant en outre une seconde traverse, chacune des première et seconde traverses comprenant des portions d'une pluralité de structures de guidage, l'une des structures de guidage étant située au niveau de chacun des quatre coins de l'ensemble de cellules de batterie (200), respectivement.

3. Bloc-batterie (10) selon la revendication 1, dans lequel les fentes de guidage (310) s'étendent sur toute la hauteur de la traverse, et les nervures de guidage (320) s'étendent sur au moins une partie de toute la hauteur des côtés de chaque ensemble de bâti de bus-barre (220).

4. Bloc-batterie (10) selon la revendication 1, dans lequel la pluralité d'ensembles de cellules de batterie (200) et la traverse comprennent conjointement une structure de fixation (400) fixant une position de chaque ensemble de cellules de batterie (200) par rapport à la plaque de base (110) le long d'un axe Z du bloc-batterie (10).

5. Bloc-batterie (10) selon la revendication 4, dans lequel la structure de fixation (400) inclut une première rainure (410) évidée dans une partie inférieure de la traverse et un premier crochet (412) s'étendant depuis chaque ensemble de bâti de bus-barre (220), le premier crochet (412) étant engagé avec la première rainure (410).

6. Bloc-batterie (10) selon la revendication 5, dans lequel le premier crochet (412) est un crochet déplaçable de manière élastique, et la première rainure (410) et le premier crochet (412) forment ensemble un assemblage par encliquetage (414).

7. Bloc-batterie (10) selon la revendication 5, dans lequel la structure de fixation (400) comprend en outre une seconde rainure (420) évidée dans une partie supérieure de la traverse et un second crochet (422) s'étendant depuis chaque ensemble de bâti de bus-barre (220) et entrant en contact avec une marche inférieure de la seconde rainure (420).

8. Bloc-batterie (10) selon la revendication 7, dans lequel la seconde rainure (420) a un sommet ouvert, et le second crochet (422) est un crochet rigide qui entre en contact avec la marche inférieure de la seconde rainure (420) pour supporter l'ensemble de cellules de batterie (200).

9. Bloc-batterie (10) selon la revendication 7, dans lequel la première rainure (410) et la seconde rainure (420) sont espacées l'une de l'autre et sont chacune disposées à l'extérieur d'une limite extérieure de la fente de guidage (310).

10. Bloc-batterie (10) selon la revendication 9, dans lequel le premier crochet (412) s'étend plus loin de l'ensemble de cellules de batterie (200) que le second crochet (422).

11. Bloc-batterie (10) selon la revendication 7, dans lequel le premier crochet (412), le second crochet (422) et les nervures de guidage (320) sont chacun disposés sur des côtés de l'ensemble de bâti de bus-barre (220).
